# EUROPEAN PATENT APPLICATION

(11) **EP 4 436 272 A1**
(43) Date of publication of application: **25.09.2024**
(21) Application number: 21964804.5
(22) Date of filing: 19.11.2021
(51) Int. Cl.: H04W 52/32

(54) **BASE STATION AND COMMUNICATION METHOD**

(71) Applicant: NTT DOCOMO, INC., Tokyo 100-6150 (JP)
(72) Inventor: KURITA, Daisuke, Tokyo 100-6150 (JP); KUMAGAI, Shinya, Tokyo 100-6150 (JP); OHARA, Tomoya, Tokyo 100-6150 (JP); NAKAMURA, Takuma, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/042666
(87) International publication number: WO 2023/089789

(57) **Abstract**

A base station includes a transmitting unit that transmits a downlink signal to a plurality of terminals and a control unit that controls transmission power of the downlink signal. The control unit changes transmission power of a first downlink signal that is common to the plurality of terminals, and controls, for each of the plurality of terminals, transmission power of a second downlink signal that is to be individually transmitted to each terminal among the plurality of terminals.

## Description

### FIELD OF THE INVENTION

The present invention relates to a base station and a communication method in a wireless communication system.

### BACKGROUND OF THE INVENTION

In the 3GPP (3rd generation partnership project), in order to achieve increased system capacity, higher data transmission speed, and lower delay and the like in wireless sections, wireless communications called 5G or NR (new radio) (hereinafter the wireless communications are referred to as the "NR") are being developed. In 5G, various wireless techniques and network architectures have been studied in order to satisfy the requirement that the delay in a wireless section be less than or equal to 10 Gbps while achieving the throughput of greater than or equal to 1 ms (for example, Non-Patent Document 1).

Further, studies on a future system or 6G after 5G have been started. In the future system, further enhanced communication performance and diversification and the like of use cases are assumed.

### Citation List

### Non-Patent Document

Non-Patent document 1: 3GPP TS 38.300 V16.7.0 (2021-09)

### SUMMARY OF THE INVENTION

### TECHNICAL PROBLEM

In a next-generation system, reductions in power consumed on a network side have been studied. However, in related art, base stations are configured such that transmission power is set according to a cell design and total transmission power or power spectrum density (PSD) is constantly fixed. In this situation, it is difficult to perform a power save operation on the network side.

The present invention has been created in view of the above point, and an object of the present invention is to achieve the power save operation on the network side in a wireless communication system.

### SOLUTION TO PROBLEM

According to a disclosed technique, a base station is provided, including a transmitting unit configured to transmit a downlink signal to a plurality of terminals, and a control unit configured to control transmission power of the downlink signal. The control unit is configured to change transmission power of a first downlink signal that is common to the plurality of terminals, and control, for each of the plurality of terminals, transmission power of a second downlink signal that is to be individually transmitted to each terminal among the plurality of terminals.

### ADVANTAGEOUS EFFECTS OF INVENTION

According to the disclosed technique, a power save operation can be achieved on a network side in a wireless communication system.

### BRIEF DESCRIPTION OF THE DRAWINGS

[FIG. 1] FIG. 1 is a diagram for describing a wireless communication system according to an embodiment of the present invention.
[FIG. 2] FIG. 2 is a diagram showing an example of coverage according to the embodiment of the present invention.
[FIG. 3] FIG. 3 is a diagram showing an example (1) of downlink transmission power according to the embodiment of the present invention.
[FIG. 4] FIG. 4 is a diagram showing cell arrangement according to the embodiment of the present invention.
[FIG. 5] FIG. 5 is a diagram showing an example (2) of the downlink transmission power according to the embodiment of the present invention.
[FIG. 6] FIG. 6 is a diagram showing an example (3) of the downlink transmission power according to the embodiment of the present invention.
[FIG. 7] FIG. 7 is a diagram showing an example of a functional configuration of a base station 10 according to the embodiment of the present invention.
[FIG. 8] FIG. 8 is a diagram showing an example of a functional configuration of a terminal 20 according to the embodiment of the present invention.
[FIG. 9] FIG. 9 is a diagram showing an example of a hardware configuration of each of the base station 10 and the terminal 20 according to the embodiment of the present invention.
[FIG. 10] FIG. 10 is a diagram showing a configuration example of a vehicle 2001 according to the embodiment of the present invention.

### DETAILED DESCRIPTION OF THE PREFERRED EMBODIMENTS

Hereinafter, embodiments of the present invention will be described with reference to the drawings. Each of the embodiments described below is merely an example, and the embodiments to which the present invention applies are not limited to the embodiments set forth below.

When a wireless communication system according to the embodiment of the present invention operates, existing techniques are used as appropriate. The existing techniques include, for example, existing LTE, but are not limited to the existing LTE. The term "LTE" used in the specification broadly means LTE-Advanced and systems (e.g., NR) used after LTE-Advanced, unless otherwise stated.

In addition, in the embodiments of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE are used. This is for convenience of description, and signals, functions, and the like similar to these may be referred to by other names. The above-mentioned terms in the NR correspond to NR-SS, NR-PSS, NR-SSS, NR-PBCH, NR-PRACH, and the like. However, even a signal used in NR is not necessarily specified as "NR-."

In the embodiments of the present invention, a duplex system may include a time division duplex (TDD) system, a frequency division duplex (FDD) system, or any other systems (e.g., flexible duplex or the like).

In the embodiment of the present invention, "configure" used for a wireless parameter or the like may mean that a predetermined value is pre-configured, or that the wireless parameter indicated by a base station 10 or a terminal 20 is set.

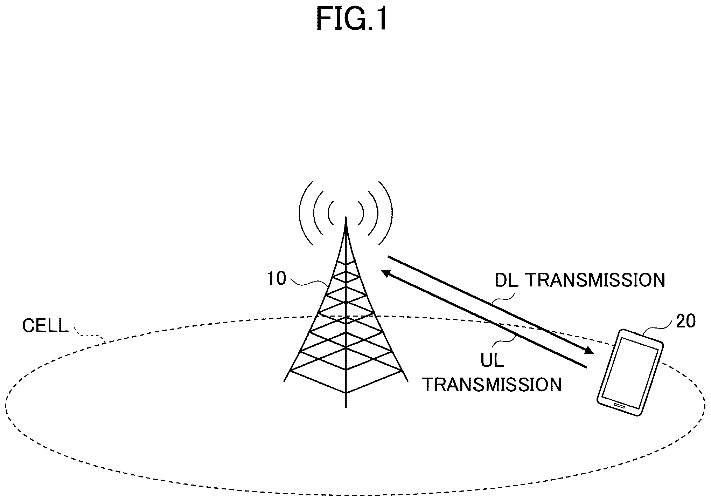

FIG. 1 is a diagram for describing the wireless communication system according to the embodiment of the present invention. As shown in FIG. 1, the wireless communication system according to the embodiment of the present invention includes the base station 10 and the terminal 20. Although one base station 10 and one terminal 20 are illustrated in FIG. 1, this is merely an example, and a plurality of base stations 10 and a plurality of terminals 20 may be provided.

The base station 10 is a communication device that provides one or more cells and performs a wireless communication with the terminal 20. A physical resource of a wireless signal is defined in a time domain and a frequency domain, and the time domain may be defined by the number of orthogonal frequency division multiplexing (OFDM) symbols. The frequency domain may be defined by the number of subcarriers or the number of resource blocks. In addition, a transmission time interval (TTI) in the time domain may be a slot or a sub-slot, or the TTI may be a sub-frame.

The base station 10 can perform carrier aggregation in which a plurality of cells (a plurality of component carriers (CCs)) are aggregated to communicate with the terminal 20. In the carrier aggregation, one primary cell (PCell) and one or more secondary cells (SCell) are used.

The base station 10 transmits a synchronization signal, system information, and the like to the terminal 20. The synchronization signal includes, for example, the NR-PSS and the NR-SSS. The system information is transmitted by, for example, the NR-PBCH or the PDSCH, and the system information is also referred to as broadcast information. As illustrated in FIG. 1, the base station 10 transmits a control signal or data to the terminal 20 in a downlink (DL), and receives a control signal or data from the terminal 20 in an uplink (UL). In this description, what is transmitted in a control channel such as the PUCCH and the PDCCH is referred to as the control signal, and what is transmitted in a shared channel such as the PUSCH and the PDSCH is referred to as the data. However, such a way of using these names is merely an example.

The terminal 20 is a communication device having a wireless communication function used in a smartphone, a cellular phone, a tablet, a wearable device, or a communication module for machine-to-machine (M2M). As illustrated in FIG. 1, the terminal 20 receives the control signal or data from the base station 10 in the DL, and then transmits the control signal or data to the base station 10 in the UL. With this approach, various communication services, provided by the wireless communication system, are used. The terminal 20 may be referred to as UE, and the base station 10 may be referred to as gNB.

The terminal 20 can perform carrier aggregation in which a plurality of cells (a plurality of CCs) are aggregated to communicate with the base station 10. In the carrier aggregation, one primary cell and one or more secondary cells are used. Also, a PUCCH-SCell with a PUCCH may be used.

Here, studies on a future system or 6G after 5G have been started. In the future system, further enhanced communication performance and diversification and the like of use cases are assumed.

For example, use cases such as ultra-coverage extension, an ultra-long distance communication, ultra-large capacity, an ultra-reliable communication, a virtual cell (user centric no cell), a flexible network, a mesh network, and sidelink are assumed.

In addition, in the next-generation system, reductions in power consumption on the network side have been studied. For example, transmission power required for the terminal 20 varies depending on a distance between the terminal 20 as a communication target and the base station 10. For example, a reception state of a downlink signal at the terminal 20 that is near the base station 10 is better than that at the terminal 20 that is far from the base station 10. However, in the related art, base stations are each configured such that transmission power is set according to a cell design and total transmission power or power spectrum density (PSD) is constantly fixed, and as result, it may be difficult to perform a power save operation on a network side.

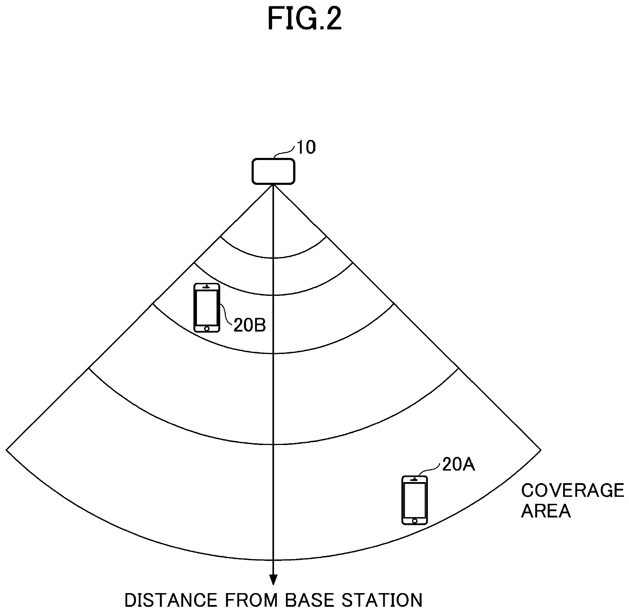

FIG. 2 is a diagram showing an example of coverage according to the embodiment of the present invention. For example, power consumption of the base station 10 can be estimated by controlling the transmission power of the base station 10 according to positions of terminals 20 as illustrated in a case where high transmission power is set for a terminal 20A being far from the base station 10 shown in FIG. 2 and where low transmission power is set for a terminal 20B being near the base station 10. However, at present, there is no approach with which a given terminal 20 transmits information for controlling downlink transmission power to the base station 10, and also, there is no approach with which the base station 10 notifies the terminal 20 of the downlink transmission power that is set.

In view of the above situation, the following operations 1) and 2) may be performed to enable an adaptive control for DL transmission power of the base station 10, for purposes of performing the power save operation on the network side.

1) Operation with respect to a signal and channel (for example, SSB (SS/PBCH block), a PDSCH carrying remaining minimum system information (RMSI), a channel state information-reference signal (CSI-RS), or the like) common to the terminal 20
   1-1) The base station 10 adaptively sets different DL transmission power (DL total transmission power / PSD) for a DL transmission signal.
   1-2) The terminal 20 reports power control information required for a neighboring base station 10 to adaptively control the DL transmission power, to a neighboring or higher network node, such as the neighboring base station 10, a central unit (CU), or a core node.
   1-3) The base station 10 notifies the terminal 20 of information relating to the DL transmission power to be adaptively controlled.
2) Operation with respect to a signal and channel (for example, PDSCH, PDCCH, or the like) dedicated to the terminal 20
   2-1) The base station 10 sets individual DL transmission power for each terminal 20.
   2-2) The terminal 20 reports assistant information required for the base station 10 to adaptively control DL transmission power, to the base station 10.
   2-3) The base station 10 notifies the terminal 20 of the DL transmission power.
   2-4) The terminal 20 reports the assistant information and capability of receiving a notification.

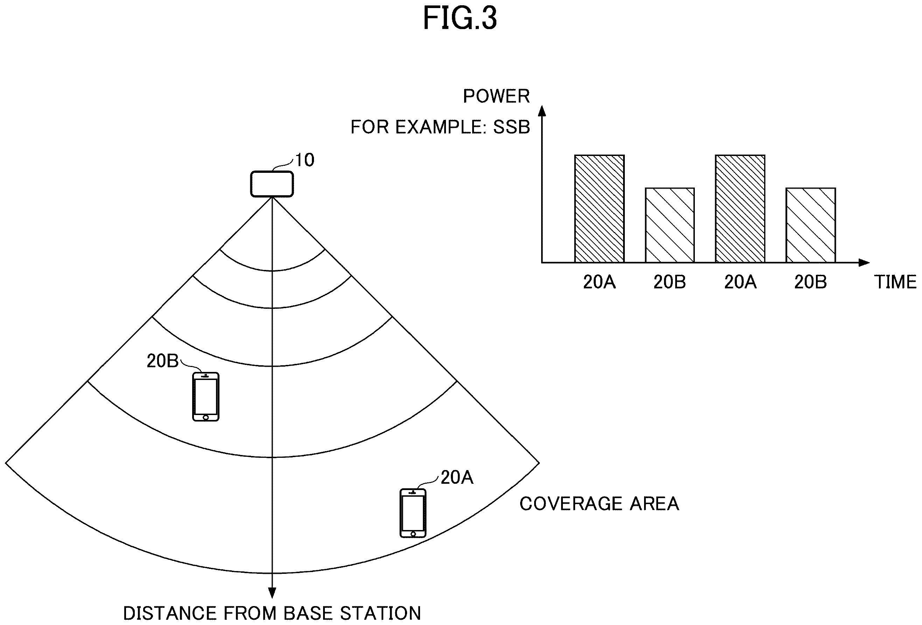

FIG. 3 is a diagram showing an example (1) of the downlink transmission power according to the embodiment of the present invention. In the operation in 1-1) above, for example, the transmission power may periodically change for a periodically transmitted signal (for example, SSB). FIG. 3 shows an example in which a given SSB, with which transmission power can be received in a distance area where the terminal 20A is situated, and a given SSB, with which transmission power that can be received in a distance area where the terminal 20B is situated and cannot be received in a distance area where the terminal 20A is situated, are alternately transmitted.

Here, when the transmission power is small, the area degenerates, and as a result, for example, a case where the terminal 20A is out of service occurs. In this case, in the operation in 1-2) above, the degenerated area may be compensated by cooperation with an adjacent base station 10, and in the operation in 1-3) above, the base station 10 may notify the terminal 20 of the transmission power.

The base station 10 may preset an adaptive change in the DL transmission power, or may determine the adaptive change in the DL transmission power, based on a visited state of the terminal 20. For example, in FIG. 3, when the base station 10 determines that terminals 20 are not visited in a distance area where the terminal 20A is situated, the base station 10 may control the DL power so as to reduce the transmission power, by assuming that the terminals 20 perform reception in an area closer than the above area, without assuming that the terminals 20 perform the reception in the above area. The determination of whether any terminal 20 is visited may be made based on the content of a measurement report from the terminal 20, the presence or absence of RACH transmission, and the frequency or the like of the RACH transmission.

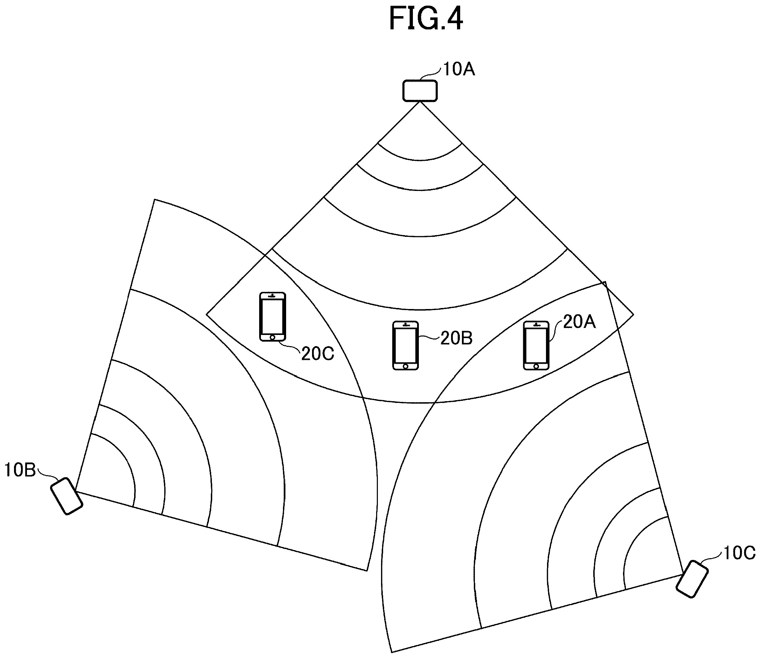

FIG. 4 is a diagram showing the cell arrangement according to the embodiment of the present invention. In the operation in 1-2) above, the base station 10 may report information related to the adaptive control of DL transmission power that is predefined, semi-statically, or dynamically set, to a network node such as a neighboring or higher base station 10, a CU, or a core node.

The content of the report may include information shown in the following a) to d).

a) A value of transmission power in the time domain. For example, the value of the transmission power and information on the time domain at a normal time, and the value of the transmission power and information on the time domain at a control time are used. The information on the time domain may be, for example, set in a slot unit, a radio frame unit, or a symbol unit, or may include a time.
b) Applied channel.
c) Measurement information by the terminal 20.
d) Information on a visited terminal 20. For example, the number of visited terminals 20, a position of each terminal 20, and the like may be used.

Based on the report, the base station 10 may control the DL transmission power of the base station 10. For example, in an area where the terminal 20A shown in FIG. 4 is located, base stations 10A and 10C may perform a cooperative operation so as not to reduce the transmission power at the same time.

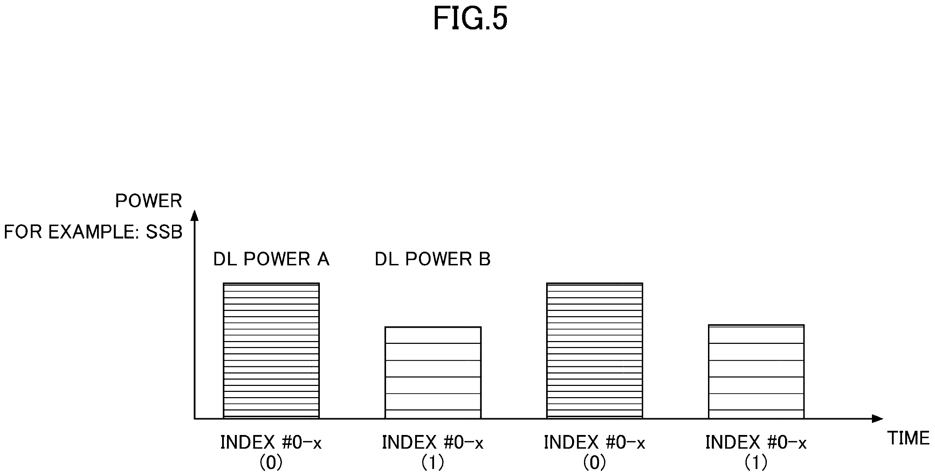

FIG. 5 is a diagram showing an example (2) of the downlink transmission power according to the embodiment of the present invention. In the operation in 1-3) above, the base station 10 may notify the terminal 20 of information on the DL transmission power to be adaptively controlled.

The base station 10 may notify the terminal 20 of information related to the control of the DL transmission power.
For example, when the DL transmission power for the SSB is notified, a different value may be notified based on changes in the transmission power, or alternately, for example, a SIB1 information element ss-PBCH-BlockPower may be changed based on the transmission power.

The base station 10 may set a change pattern of the DL transmission power and notify the terminal 20 of the change pattern. For example, the base station 10 notifies the terminal 20 of a plurality of power values, and may separately notify the terminal 20 of the transmission power corresponding to time resources (SFN, the subframe, the slot, the symbol, and/or a period or the like of each channel).

For example, as shown in FIG. 5, in a case example in which transmission power for the SSB with respect to the index #0-x is changed for each period, the base station 10 may indicate a value of DL power A and a value of DL power B, and further may indicate two power patterns, that is, "0" corresponding to the DL power A and "1" corresponding to the DL power B. The two power patterns may be defined to be alternately repeated, or may be indicated in advance. Such an indication enables elimination of the need to change the SIB1 information according to the transmission power for each transmission cycle.

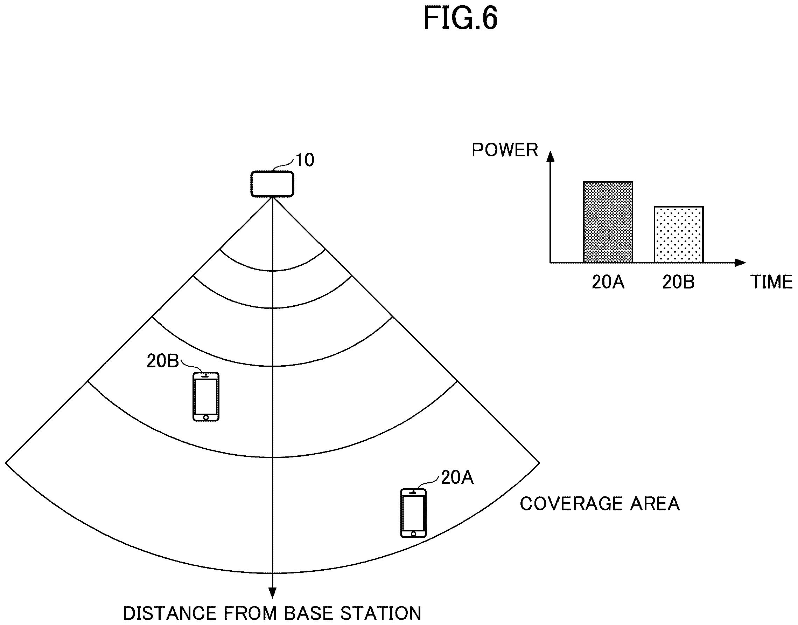

FIG. 6 is a diagram showing an example (3) of the downlink transmission power according to the embodiment of the present invention. In the operation in 2-1) above, the base station 10 may set individual DL transmission power for each terminal 20. For example, as illustrated in FIG. 6, the base station 10 may set the DL transmission power for the terminal 20A and the DL transmission power for the terminal 20B, to different values. The base station 10 may set the DL transmission power for the terminal 20A to be lower than the DL transmission power for the terminal 20B that is located farther from the base station 10 than the terminal 20A is.

For example, the base station 10 may control DL transmission power for the DL resource that is allocated to the terminal 20. As the DL transmission power, total DL transmission power or PSD may be used. For example, the base station 10 may control the DL transmission power based on a value of the measurement report that is received from the terminal 20. Also, the terminal 20 may transmit assistance information related to a DL transmission power control, to the base station 10. For transmission power for the PDSCH, the base station 10 may control the transmission power based on a feedback (ACK or NACK) from the terminal 20. For example, when the feedback from the terminal 20 is NACK, the base station 10 may increase the transmission power for the PDSCH.

In the operation in 2-2) above, the terminal 20 may report, to the base station 10, information to be referred to when the base station 10 performs the DL transmission power control based on, for example, reception power based on a DL reference signal, an error rate of a DL signal or a DL channel, or the like. The content of the report may include a) to e) described below.

a) Expected DL transmission power
b) DL reception power
c) A range of DL transmission power
d) A range of DL reception power
e) A difference value (for example, a margin value) with respect to the DL reference signal or a received signal for a DL channel

The a)-e) above may be reported using an absolute value or a relative value.

The reporting may be performed through UCI, MAC-CE (control element) and/or RRC signaling. A timing at which the reporting is performed may be set periodically or semi-periodically. The reporting may be performed when the terminal 20 determines that the report is required, or the reporting may be performed when the network requests the report. For example, the terminal 20 may determine that the report is necessary when variations in the reception power exceed a certain threshold. The report may include information related to a base station antenna beam and/or a terminal antenna beam, and the like.

In the operation in 2-3) above, the base station 10 may notify the terminal 20 of the DL transmission power. The content of the notification may include an absolute value of the DL transmission power, an offset value of the DL transmission power, and a response (for example, YES/NO) to information from the terminal 20.

The notification may be enabled via DCI, MAC-CE or RRC signaling. The notification may be included in the DCI allocated to the DL resource, or may be notified by dedicated DCI. A timing of the notification may be set periodically, semi-periodically, or when the network determines that the notification is required. For example, the base station 10 may determine that the notification is required when the base station 10 performs the DL transmission power control. The notification may include information related to the base station antenna beam and/or the terminal antenna beam and the like.

The terminal 20 may report, to the network, UE capability illustrated in the following a) to c).

a) UE capability indicating whether to support a function related to the DL transmission power control that is performed by the base station 10. UE capability indicating whether the terminal 20 can transmit assistant information. UE capability indicating whether a notification related to the DL transmission power of the base station 10 can be received.
b) UE capability indicating which frequency supports a) above. For example, the UE capability that collectively indicates whether it is supported by all frequencies may be used. For example, the UE capability indicating whether supporting is performed by the terminal 20 may be used. For example, the UE capability indicating whether supporting is performed for each frequency may be used. For example, the UE capability indicating whether supporting is performed for each FR such as FR1 and FR2 may be used.
c) UE capability indicating which duplexing scheme supports a) above. For example, the UE capability indicating whether supporting is performed by the terminal 20 may be used. For example, the UE capability indicating whether supporting is performed for each duplex scheme may be used. The duplex scheme may include, for example, TDD, FDD, or FD (full duplex).

According to the above-described embodiment, the base station 10 can control the DL transmission power as necessary. Further, the base station 10 can acquire the assistant information from the terminal 20, and can appropriately perform the DL transmission power control based on the assistant information.

That is, in the wireless communication system, the power save operation can be achieved on the network side.

### (Device Configuration)

Hereinafter, a functional configuration example of each of the base station 10 and the terminal 20 that perform the process and operation described above will be described. Each of the base station 10 and the terminal 20 includes the function implemented in the above embodiments. However, each of the base station 10 and the terminal 20 may have only any function described in the embodiments.

### <Base Station 10>

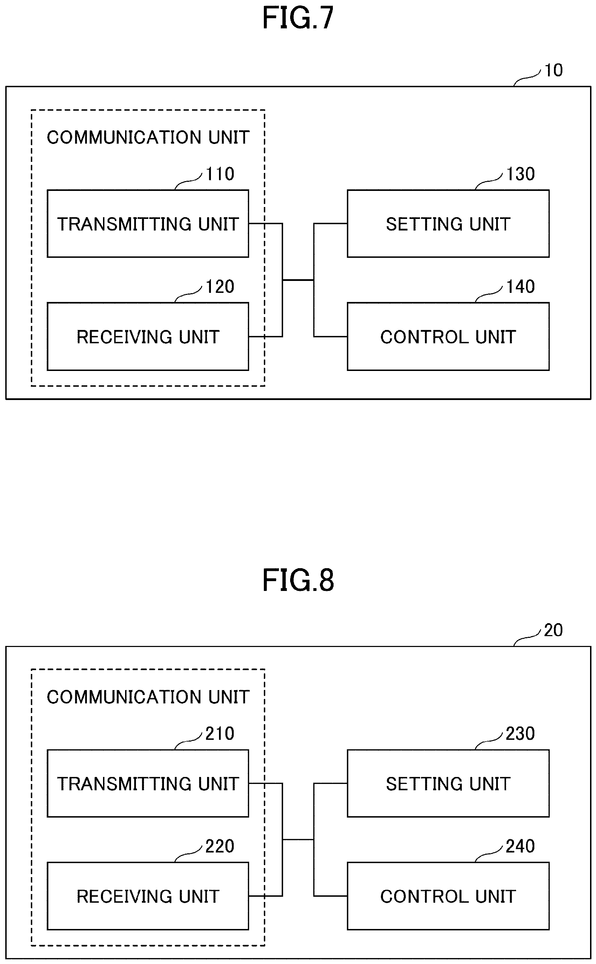

FIG. 7 is a diagram illustrating an example of the functional configuration of the base station 10. As illustrated in FIG. 7, the base station 10 includes a transmitting unit 110, a receiving unit 120, a setting unit 130, and a control unit 140. The functional configuration shown in FIG. 7 is merely an example. Any functional section and any functional unit name may be adopted as long as the operations according to the embodiments of the present invention can be performed. The transmitting unit 110 and the receiving unit 120 may be referred to as a communication unit.

The transmitting unit 110 includes a function of generating a signal to be transmitted to the terminal 20 and of wirelessly transmitting the signal. The receiving unit 120 includes a function of receiving various signals transmitted from the terminal 20 and of acquiring information of, for example, a higher layer from the received signals. The transmitting unit 110 has a function of transmitting an NR-PSS, NR-SSS, NR-PBCH, or DL/UL control signal, DL data, and the like to the terminal 20. The transmitting unit 110 also transmits setting information and the like described in the embodiments.

The setting unit 130 stores, in a storage device, the setting information that is preset, and various kinds of setting information to be transmitted to the terminal 20, and retrieves the setting information from the storage device as necessary. The control unit 140 performs, for example, the allocating of the resource, overall control of the base station 10, and the like. The functional units related to signal transmission that is performed by the control unit 140 may be included in the transmitting unit 110, and the functional units related to signal reception that is performed by the control unit 140 may be included in the receiving unit 120. The transmitting unit 110 and the receiving unit 120 may be referred to as a transmitter and a receiver, respectively.

### <Terminal 20>

FIG. 8 is a diagram illustrating an example of the functional configuration of the terminal 20. As illustrated in FIG. 8, the terminal 20 includes a transmitting unit 210, a receiving unit 220, a setting unit 230, and a control unit 240. The functional configuration shown in FIG. 8 is merely an example. Any functional section and any functional unit name may be adopted as long as the operation according to the embodiments of the present invention can be performed. The transmitting unit 210 and the receiving unit 220 may be referred to as a communication unit.

The transmitting unit 210 creates a transmission signal from the transmission data, and wirelessly transmits the transmission signal. The receiving unit 220 wirelessly receives various signals, and acquires a signal of a higher layer, from each of the received signals of a physical layer. The transmitting unit 210 transmits HARQ-ACK, and the receiving unit 220 receives the setting information and the like described in the embodiments.

The setting unit 230 stores in a storage device, various setting information that is received from the base station 10 through the receiving unit 220, and then retrieves the setting information from the storage device as necessary. The setting unit 230 also stores setting information that is preset. The control unit 240 performs the control or the like of the entire terminal 20. The functional units related to signal transmission that is performed by the control unit 240 may be included in the transmitting unit 210, and the functional units related to signal reception that is performed by the control unit 240 may be included in the receiving unit 220. The transmitting unit 210 and the receiving unit 220 may be referred to as a transmitter and a receiver, respectively.

### (Hardware Configuration)

The block diagrams (Figs. 7 and 8) described in the above embodiments illustrate blocks each of which shows a functional unit. These functional blocks (configuring units) are implemented by any combination of at least any one of hardware and software. A method of implementing each functional block is not particularly limited. In other words, each functional block may be implemented using one device that is physically or logically coupled, or may be implemented using two or more devices that are physically or logically separated and that are directly or indirectly connected (for example, by wired, wireless, or the like). Each function block may be implemented by a combination of software and either of the one device or a plurality of devices.

The functions include determining, deciding, judging, computing, calculating, processing, deriving, investigating, searching, confirming, receiving, transmitting, outputting, accessing, resolving, selecting, choosing, establishing, comparing, assuming, expecting, regarding, broadcasting, notifying, communicating, forwarding, configuring, reconfiguring, allocating, mapping, assigning, and the like, but are not limited thereto. For example, a functional block (configuring unit) corresponding to a transmission function is referred to as a transmitting unit or a transmitter. In any case, as described above, an implementation method is not particularly limited.

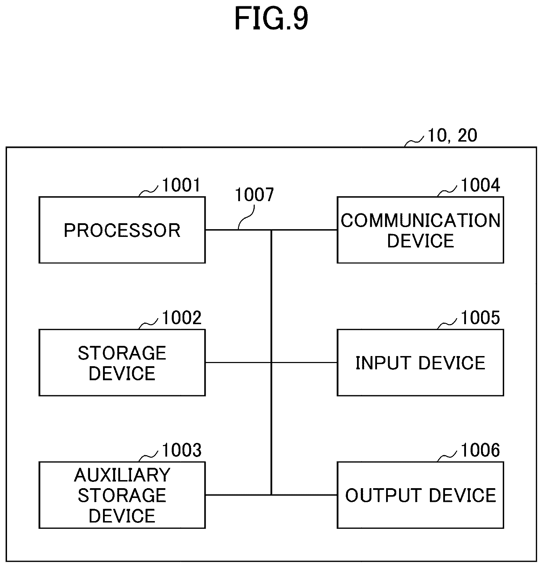

For example, the base station 10, the terminal 20, and the like according to one embodiment of the present disclosure may each function as a computer that executes a wireless communication method in the present disclosure. Fig. 9 is a diagram illustrating an example of a hardware configuration of each of the base station 10 and the terminal 20 according to one embodiment of the present disclosure. Each of the base station 10 and the terminal 20 may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a device, a unit, or the like. The hardware configuration of each of the base station 10 and the terminal 20 may be configured to include one or more devices illustrated in the drawings, or may be configured without including some devices.

Each function of the base station 10 and the terminal 20 is implemented such that predetermined software (program) is read on hardware such as the processor 1001 and the storage device 1002, and such that the processor 1001 performs an operation to control the communication by the communication device 1004, or such that the processor 1001 controls at least one of reading and writing of data in the storage device 1002 and the auxiliary storage device 1003.

For example, the processor 1001 executes an operating system and controls the entire computer. The processor 1001 may be configured with a central processing unit (CPU) including an interface with a peripheral device; a control device; an arithmetic device; and a register and the like. For example, the control unit 140, the control unit 240, and the like described above may be implemented by the processor 1001.

Further, the processor 1001 reads a program (program code), a software module, or data, or the like, from at least one of the auxiliary storage device 1003 and the communication device 1004, to the storage device 1002, and executes various processes according to them. A program that causes a computer to execute at least a portion of the operation described in the above embodiments is used as the above program. For example, the control unit 140 of the base station 10 illustrated in Fig. 7 may be implemented by a control program that is stored in the storage device 1002, and that is executed by the processor 1001. Further, for example, the control unit 240 of the terminal 20 illustrated in Fig. 8 may be implemented by a control program that is stored in the storage device 1002 and that is executed by the processor 1001. The case where the various processes are executed by the one processor 1001 has been described, but the various processes may be performed simultaneously or sequentially by two or more processors 1001. The processor 1001 may be implemented by one or more chips. The program may be transmitted using a network via an electric communication line.

The storage device 1002 is a computer readable recording medium and may be configured with at least one among a read only memory (ROM), an erasable programmable ROM (EPROM), an electrically erasable programmable ROM (EEPROM), a random access memory (RAM), and the like. The storage device 1002 may be also referred to as a register, a cache, a main memory (main storage device), or the like. The storage device 1002 can store programs (program codes), software modules, or the like, which is executable for carrying out the communication method according to one embodiment of the present disclosure.

The auxiliary storage device 1003 is a computer-readable recording medium and may be configured with, for example, at least one among an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage medium may be, for example, a database, a server, or any other appropriate medium, the database including at least one of the storage device 1002 and the auxiliary storage device 1003.

The communication device 1004 is hardware (a transceiving device) for performing communication between computers via at least one of a wired network and a wireless network, and is also referred to as, for example, a network device, a network controller, a network card, a communication module, or the like. The communication device 1004 may include a high-frequency switch, a duplexer, a filter, a frequency synthesizer, or the like in order to achieve at least one of frequency division duplex (FDD) and time division duplex (TDD). For example, a transceiving antenna, an amplifying unit, a transmitting and receiving unit, a transmission line interface, or the like may be implemented by the communication device 1004. The transmitting and receiving unit may be implemented by a transmitting unit and a receiving unit being physically or logically separated.

The input device 1005 is input equipment (for example, a keyboard, a mouse, a microphone, a switch, a button, a sensor, or the like) that receives an input from the outside. The output device 1006 is an output device (for example, a display, a speaker, an LED lamp, or the like) that externally send an output. The input device 1005 and the output device 1006 may be integrally configured (for example, a touch panel).

Devices such as the processor 1001 and the storage device 1002 are connected via the bus 1007 for communicating information. The bus 1007 may be configured with a single bus or may be configured with a bus that differs with respect to devices.

Further, each of the base station 10 and the terminal 20 may be configured to include hardware such as a microprocessor, a digital signal processor (DSP), an application specific integrated circuit (ASIC), a programmable logic device (PLD), or a field programmable gate array (FPGA), or alternatively, a portion or all of the functional blocks may be implemented by hardware. For example, the processor 1001 may be implemented using at least one of these pieces of hardware.

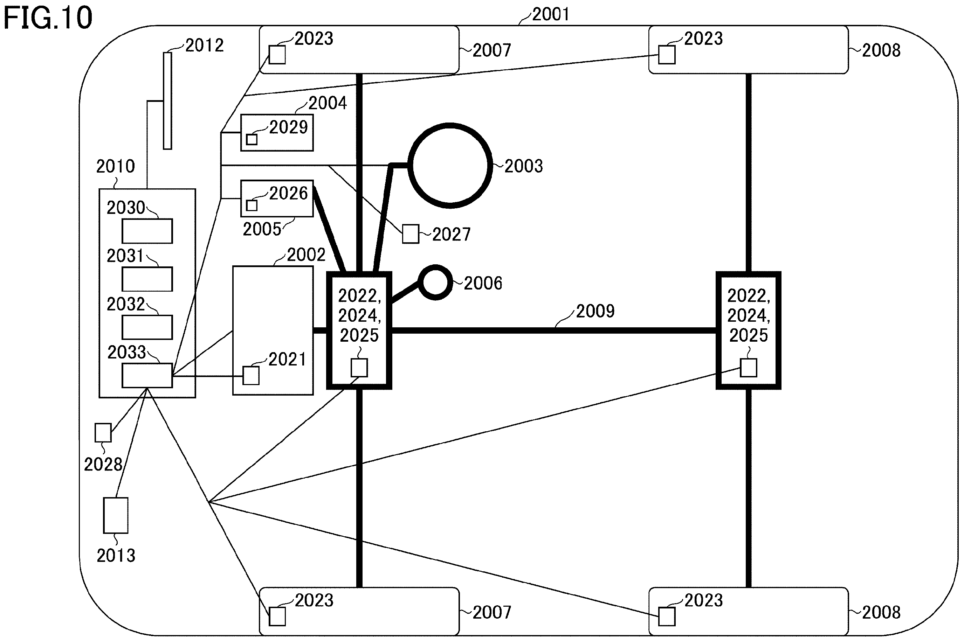

FIG. 10 shows a configuration example of a vehicle 2001. As shown in FIG. 10, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and may be applied to, for example, the communication module 2013.

The drive unit 2002 is configured by, for example, an engine, a motor, or a hybrid of the engine and the motor. The steering unit 2003 includes at least a steering wheel (also referred to as a handle), and is configured to steer at least one of the front wheel and the rear wheel based on an operation of the steering wheel that is operated by a user.

The electronic control unit 2010 includes a microprocessor 2031, memories (ROM and RAM) 2032, and a communication port (IO port) 2033. Signals from various sensors 2021 to 2029 provided in the vehicle 2001 are input to the electronic control unit 2010. The electronic control unit 2010 may be referred to as an electronic control unit (ECU).

As the signals from the various sensors 2021 to 2029, a current signal from a current sensor 2021 for sensing a current of the motor, rotational speed signals of front wheels and rear wheels acquired by rotational speed sensors 2022, air pressure signals of the front wheels and rear wheels acquired by air pressure sensors 2023, vehicle speed signals acquired by vehicle speed sensors 2024, accelerator signals acquired by accelerometers 2025, a signal of a depression amount of an accelerator pedal acquired by an accelerator pedal sensor 2029, a signal of a depression amount of a brake pedal acquired by a brake pedal sensor 2026, an operation signal of a shift lever acquired by a shift lever sensor 2027, and detection signals and the like for detecting an obstacle, a vehicle, a pedestrian, and the like acquired by an object detection sensor 2028 are included.

The information service unit 2012 is configured by various devices for providing various information such as driving information, traffic information, entertainment information, and the like, such as a car navigation system, an audio system, a speaker, a television, and a radio, and one or more ECUs for controlling these devices. The information service unit 2012 provides various multimedia information and multimedia services to the occupant of the vehicle 2001 using information acquired from an external device via the communication module 2013 or the like.

A drive support system 2030 includes various devices for providing functions for preventing accidents and reducing the driving load of the driver, such as an electric scanning radar, a light detection and ranging (LiDAR), a camera, a positioning locator (for example, GNSS or the like), map information (for example, a high definition (HD) map and an automatic vehicle (AV) map), a gyro system (for example, an inertial measurement unit (IMU) and an inertial navigation system (INS)), an artificial intelligence (AI) chip, and an AI processor, and one or more ECUs for controlling these devices. The drive support system unit 2030 transmits and receives various kinds of information via the communication module 2013 and realizes a drive support function or an automatic drive function.

The communication module 2013 may communicate with the microprocessor 2031 and components of the vehicle 2001, via the communication port. For example, through the communication port 2033, the communication module 2013 performs transmission and reception of data between any one among the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM and RAM) 2032 in the electronic control unit 2010, and the sensors 2021 to 29, which are provided in the vehicle 2001.

The communication module 2013 is a communication device that can be controlled by the microprocessor 2031 of the electronic control unit 2010 and can communicate with an external device. For example, the communication module 2013 transmits and receives various kinds of information, to and from an external apparatus via wireless communication. The communication module 2013 may be internal or external to the electronic controller 2010. The external device may be, for example, a base transceiver station, a mobile station, or the like.

The communication module 2013 transmits a current signal from a current sensor, which is input to the electronic control unit 2010, to an external device via wireless communication. The communication module 2013 also transmits, to an external device via wireless communication, the signals of rotational speed of the front wheels and rear wheels that are acquired by the rotational speed sensors 2022, the signals of air pressure of the front wheels and rear wheels that are acquired by the air pressure sensors 2023, the vehicle speed signals acquired by the vehicle speed sensors 2024, the accelerator signals acquired by the accelerometers 2025, the signal of the accelerator pedal depression acquired by the accelerator pedal sensor 2029, the signal of brake pedal depression acquired by the brake pedal sensor 2026, the operation signal of the gearshift lever acquired by the gearshift lever sensor 2027, and the detection signals and the like for detecting an obstacle, a vehicle, a pedestrian, and the like acquired by the object detection sensor 2028, which are input to the electronic control unit 2010.

The communication module 2013 receives various kinds of information (traffic information, signal information, inter-vehicle information, and the like) transmitted from an external device, and displays the information on the information service unit 2012 provided in the vehicle 2001. The communication module 2013 stores various kinds of information received from the external device in the memory 2032 that can be used by the microprocessor 2031. The microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021 to 2029, and the like provided in the vehicle 2001 based on the information stored in the memory 2032.

### (Summary of Embodiments)

As described above, according to the embodiments of the present invention, a base station is provided, including a transmitting unit that transmits a downlink signal to a plurality of terminals, and a control unit that controls transmission power of the downlink signal. The control unit changes transmission power of a first downlink signal common to the plurality of terminals, and controls, for each of the plurality of terminals, transmission power of a second downlink signal that is to be individually transmitted to each terminal among the plurality of terminals.

With the above configuration, a base station 10 can control DL transmission power as necessary. Further, the base station 10 can acquire assistance information from a terminal 20, and appropriately perform a DL transmission power control based on the assistant information. That is, in a wireless communication system, a power save operation can be performed on a network side.

A control unit may change transmission power of a first downlink signal based on a visited state of a terminal 20. With this arrangement, a base station 10 can control DL transmission power as necessary.

A transmitting unit may transmit information related to a transmission power control of a first downlink signal, to another base station. With this configuration, a base station 10 can control DL transmission power control as necessary.

A transmitting unit may transmit information related to a transmission power control of a first downlink signal to at least one of a plurality of terminals. With this configuration, a base station 10 can control DL transmission power as necessary.

A base station may further include a receiving unit configured to receive information related to a transmission power control of a second downlink signal from at least one of a plurality of terminals, and a control unit may control transmission power of the second downlink signal based on the information related to the transmission power control of the second downlink signal. With this configuration, a base station 10 can control DL transmission power as necessary. Further, the base station 10 can acquire assistance information from a terminal 20 and execute appropriate DL transmission power control based on the assistant information.

In the embodiments of the present invention, a communication method is provided, including a transmission procedure of transmitting a downlink signal to a plurality of terminals, a control procedure of controlling transmission power of the downlink signal, a procedure of changing transmission power of a first downlink signal that is common to the plurality of terminals, and a procedure of controlling, for each of the plurality of terminals, transmission power of a second downlink signal that is to be individually transmitted to each terminal among the plurality of terminals.

With the above arrangement, a base station 10 can control DL transmission power as necessary. Further, the base station 10 can acquire assistant information from a terminal 20, and appropriately perform a DL transmission power control based on the assistant information. That is, in a wireless communication system, a power save operation can be performed on a network side.

### (Supplement to embodiment)

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for description, but the numerical values are merely examples, and any suitable values may be used unless otherwise stated. The classification of items in the above description is not essential to the present invention, matters described in two or more items may be combined and used as necessary, and a matter described in one item may be applied to a matter described in another item (unless there is a contradiction). The boundary between functional units or processing units in a functional block diagram does not necessarily correspond to the boundary between physical parts. The operations of a plurality of functional units may be performed physically by one component, or an operation of one functional unit may be performed physically by a plurality of parts. In the processing procedures described in the embodiment, the order of processes may be changed as long as there is no inconsistency. For the sake of convenience of the process description, the base station 10 and the terminal 20 have been described using the functional block diagrams, but such apparatuses may be implemented by hardware, software, or a combination thereof. The software executed by the processor of the base station 10 according to the embodiment of the present invention, and the software executed by the processor of the terminal 20 according to the embodiment of the present invention, may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

The notification of information is not limited to the aspect/embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (MIB (Master Information Block), SIB (System Information Block)), other signals, or combinations thereof. The RRC signaling may be referred to as an RRC message and may be, for example, an RRC connection setup message, an RRC connection reconfiguration message, or the like.

Each aspect/embodiment described in the present disclosure may be applied to at least one from among LTE (Long Term Evolution), LTE-A (LTE-Advanced), SUPER 3G, IMT-Advanced, 4G (4th generation mobile communication system), 5G (5th generation mobile communication system), 6G (6th generation mobile communication system), xG (xth generation mobile communication system) (x is, for example, an integer or a decimal), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), a system using other proper system, and next-generation systems that are extended, revised, created, and defined based on these systems. Also, a combination of multiple systems (for example, a combination of at least one of LTE and LTE-A, and 5G, or the like) may be applied.

In each aspect/embodiment described in the specification, the order of the procedure, the sequence, the flowchart, and the like may be changed as long as there is no contraction therebetween. For example, for the method described in the present disclosure, elements of various steps are presented in the illustrative order and are not limited to the specific order as presented.

In the specification, in some cases, the specific operation performed by the base station 10 may be also performed by an upper node of the base station. In a network that includes one or more network nodes including the base station 10, it is apparent that various operations performed for communication with the terminal 20 can be performed by at least one among the base station 10 and another network node (for example, MME, S-GW, or the like is considered, but such a node is not limited thereto) other than the base station 10. In the above example, one network node is used as another network node other than the base station 10. However, a plurality of other network nodes (for example, MME and S-GW) may be combined.

Information, a signal, or the like described in the present disclosure may be output from an upper layer (or a lower layer) to a lower layer (or an upper layer). Information, a signal, or the like described in the present disclosure may be input and output via a plurality of network nodes.

Input and output information, and the like may be stored in a specific place (for example, a memory) or may be managed using a management table. Input and output information, and the like may be overwritten, updated, or additionally written. Output information, and the like may be deleted. Input information, and the like may be transmitted to another device.

The determination in the present disclosure may be performed in accordance with a value (0 or 1) expressed by one bit, be performed with a Boolean value (true or false), or be performed based on a comparison between numerical values (for example, a comparison with a predetermined value).

Software should be interpreted widely to mean a command; a command set; a code; a code segment; a program code; a program; a subprogram; a software module; an application; a software application; a software package; a routine; a subroutine; an object; an executable file; an execution thread; a procedure; a function; and the like, regardless of whether software is referred to as software, firmware, middleware, a microcode, a hardware description language, or is referred to by any other name.

Further, software, commands, information, and the like may be transmitted and received via a transmission medium. For example, when software is transmitted from a web site, a server, or any other remote source, by using at least one from among a wired technology (such as a coaxial cable, a fiber optic cable, a twisted pair, or a digital subscriber line (DSL)) and a radio technology (such as infrared rays or a microwave), at least one of the wired technology and the radio technology is defined in the transmission medium.

Information, signals, and the like described in the present disclosure may be expressed using any of a variety of different techniques. For example, data, instructions, commands, information, signals, bits, symbols, chips, and the like which are mentioned throughout the description may be expressed by voltages, currents, electromagnetic waves, magnetic particles, optical fields, photons, or any combination thereof.

Note that the terms described in the present disclosure and terms necessary for understanding the present disclosure may be replaced with terms having the same or similar meanings. For example, at least one of a channel and a symbol may be a signal (signaling). Further, a signal may be a message. Further, a component carrier (CC) may be referred to as a carrier frequency, a cell, a frequency carrier, or the like.

The terms "system" and "network" used in the present disclosure are used interchangeably.

Further, information, parameters, and the like described in the present disclosure may be expressed using an absolute value, be expressed using a relative value from a predetermined value, or be expressed using corresponding other information. For example, the radio resource may be indicated by an index.

The names used for the above parameters are not limited in any respect. Further, mathematical formulas or the like using the parameters may be different from those explicitly disclosed in the present disclosure. Since various channels (for example, a PUCCH, a PDCCH, and the like) and information elements can be identified by any suitable names, various names for the various channels; and the information elements are not limited in any respect.

In the present disclosure, the terms "base station (BS)," "radio base station," "base station," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base station may also be referred to by the term such as a macrocell, a small cell, a femtocell, or a picocell.

The base station can accommodate one or more (for example, three) cells. In a case in which the base station accommodates a plurality of cells, the entire coverage area of the base station can be partitioned into a plurality of smaller areas, and each smaller area can provide a communication service through a base station subsystem (for example, a small indoor base station (Remote Radio Head (RRH)). The term "cell" or "sector" refers to all or some of the coverage area of at least one of the base station and the base station subsystem that provides a communication service in the coverage.

In the present disclosure, the terms "mobile station (MS)," "user terminal," "user equipment (UE)," "terminal," and the like can be used interchangeably.

The mobile station may be also referred to as, by those skilled in the art, a subscriber station; a mobile unit; a subscriber unit; a wireless unit; a remote unit; a mobile device; a wireless device; a wireless communication device; a remote device; a mobile subscriber station; an access terminal; a mobile terminal; a wireless terminal; a remote terminal; a handset; a user agent; a mobile client; or client, or be also referred to by some other suitable terms.

At least one of the base station and the mobile station may be also referred to as a transmitting device, a receiving device, a communication device, or the like. Note that at least one of the base station and the mobile station may include a device installed in a mobile body, a mobile body itself, or the like. The moving body may be a vehicle (for example, a car, an airplane, or the like), a moving body that moves unmanned (for example, a drone, an autonomous car or the like), or a robot (manned type or unmanned type). Note that at least one of the base station and the mobile station includes a device that does not necessarily move during a communication operation. For example, at least one of the base station and the mobile station may be an IoT (Internet of things) device such as a sensor.

Further, the base station in the present disclosure may be replaced with a user terminal. For example, in each aspect/embodiment of the present disclosure, a configuration in which communication between the base station and the user terminal is replaced with communication between a plurality of terminals 20 (for example, which may be referred to as device-to-device (D2D), vehicle-to-everything (V2X)), or the like) may be applied. In this case, the terminal 20 may have the functions of the base station 10 described above. Further, the terms "uplink" and "downlink", or the like. may be each replaced with a term (for example, "side") corresponding to inter-terminal communication. For example, an uplink channel, a downlink channel, or the like may be replaced with a side channel.

Similarly, the user terminal in the present disclosure may be replaced with the base station. In this case, the base station may have the functions of the above user terminal.

The term "determining" used in the present disclosure may cover a wide variety of actions. For example, "determining" may include, for example, events, etc., in which events such as judging, calculating, computing, processing, deriving, investigating, looking up, search, and inquiry (for example, search using a table, a database, or another data structure), or ascertaining are regarded as "determining." Further, "determining" may include, for example, events, etc., in which events such as receiving (for example, receiving information), transmitting (for example, transmitting information), input, output, or accessing (for example, accessing data in a memory) are regarded as "determining." Further, "determining" may include, for example, events in which events such as resolving, selecting, choosing, establishing, or comparing, etc. are regarded as "determining." In other words, "determining" may include events in which any operation is regarded as "determining." Further, "determining" may be replaced with "assuming," "expecting," "considering," or the like.

The term "connected," "coupled," or any modification thereof means any direct or indirect connection or coupling between two or more elements, and can cover the presence of one or more intermediate elements between two elements that are "connected" or "coupled" with each other. The coupling or the connection between the elements may be physical, logical, or a combination thereof. For example, "connection" may be replaced with "access." When used in the present disclosure, two elements can be considered to be "connected" or "coupled" with each other, by using at least one of: one or more electric wires; cables; and a printed electrical connection, or, by, as a non-limiting and non-exhaustive example, using electromagnetic energy that has a wavelength in radio frequency domain; a microwave region; or a light (both visible and invisible) region, etc.

A reference signal may be abbreviated as RS (reference signal) and may be referred to as a pilot, depending on a standard to be applied.

The phrase "based on" used in the present disclosure is not limited to "based on only" unless otherwise stated. In other words, the phrase "based on" means both of "based on only" and "based on at least."

Any reference to an element expressed using a designation such as "first," "second," or the like used in the present disclosure does not generally restrict quantities or an order of those elements. Such designations may be used in the present disclosure as a convenient method of distinguishing two or more elements. Thus, reference to the first and second elements does not mean that only two elements can be adopted, or that the first element must precede the second element in a certain form.

Further, "means" in the configuration of each of the above apparatuses may be replaced with "unit," "circuit," "device," or the like.

In the present disclosure, when "include," "including," and variations thereof are used, these terms are intended to be comprehensive, similarly to a term "equipped with (comprising)." Further, the term "or" used in the present disclosure is intended not to be an exclusive disjunction.

A radio frame may include one or more frames in the time domain. In the time domain, each of one or more frames may be referred to as a subframe. The subframe may further include one or more slots in the time domain. The subframe may have a fixed time length (for example, 1 ms) that is not in accordance with numerology.

The numerology may be a communication parameter applied to at least one of transmission and reception of a certain signal or channel. The numerology may indicate at least one from among, for example, SCS (SubCarrier Spacing), a bandwidth, a symbol length, a cyclic prefix length, a TTI (Transmission Time Interval), the number of symbols per TTI, a radio frame configuration, a specific filtering process performed in the frequency domain by a transceiver, a specific windowing process performed in the time domain by a transceiver, and the like.

The slot may include one or more symbols (OFDM (Orthogonal Frequency Division Multiplexing) symbols, SC-FDMA (Single Carrier Frequency Division Multiple Access) symbols, or the like) in the time domain. The slot may be a time unit based on the numerology.

The slot may include a plurality of mini-slots. Each mini-slot may include one or more symbols in the time domain. The mini-slot may be referred to as a sub-slot. The mini-slot may include a number of symbols smaller than a slot. The PDSCH (or PUSCH) transmitted by time unit greater than the mini-slot may be referred to as the PDSCH (or PUSCH) mapping type A. The PDSCH (or PUSCH) transmitted using the mini-slot may be referred to as the PDSCH (or PUSCH) mapping type B.

A radio frame, a subframe, a slot, a mini-slot, and a symbol each indicate a time unit in transmitting a signal. The radio frame, the subframe, the slot, the mini-slot, and the symbol may be each referred to by a corresponding other name.

For example, one subframe may be referred to as a transmission time interval (TTI), a plurality of consecutive subframes may be referred to as a TTI, or one slot or one mini-slot may be referred to as a TTI. In other words, at least one of the subframe and the TTI may be a subframe (1 ms) in existing LTE, include a period (for example, 1 to 13 symbols) shorter than 1 ms, or include a period longer than 1 ms. Note that a unit expressed as the TTI may be referred to as a slot, a mini-slot, or the like, instead of the subframe.

Here, for example, the TTI refers to a minimum time unit for scheduling in wireless communication. For example, in an LTE system, the base station performs scheduling in which a radio resource (a frequency bandwidth, a transmission power, or the like that can be used at each terminal 20) is allocated to each terminal 20, by TTI unit. Note that the definition of the TTI is not limited to the above manner.

The TTI may be used as a transmission time unit for a channel coded data packet (transport block), a code block, a code word, or the like, or, be used as a processing unit for scheduling, link adaptation, or the like. Note that when a TTI is given, a time interval (for example, the number of symbols) at which a transport block, a code block, a code word, or the like is actually mapped may be shorter than the TTI.

Note that when one slot or one mini-slot is referred to as the TTI, one or more TTIs (that is, one or more slots, or, one or more mini-slots) may be used as a minimum time unit for scheduling. Further, the number of slots (the number of mini-slots) that constitute the minimum time unit for scheduling may be controlled.

A TTI having a time length of 1 ms may be referred to as a common TTI (TTI in LTE Rel. 8-12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini-slot, a sub-slot, a slot, or the like.

Note that the long TTI (for example, a common TTI, a subframe, or the like) may be replaced with a TTI having a time length exceeding 1 ms, and the short TTI (for example, a reduced TTI, or the like) may be replaced with a TTI having a TTI length that is shorter than a TTI length of the long TTI, and that is equal to or longer than 1 ms.

The resource block (RB) is used as a resource allocation unit in time domain and frequency domain, and may include one or more consecutive subcarriers in the frequency domain. The number of subcarriers included in the RB may be same, regardless of a numerology, and be, for example, 12. The number of subcarriers included in the RB may be determined based on the numerology.

Further, a time domain of the RB may include one or more symbols, and may have a length of one slot, one mini-slot, one subframe, or one TTI. One TTI, one subframe, or the like may be configured with one or more resource blocks.

Note that one or more RBs may be referred to as a physical resource block (PRB), a sub-carrier group (SCG), a resource element group (REG), a PRB pair, an RB pair, or the like.

Further, the resource block may be configured with one or more resource elements (REs). For example, one RE may be a radio resource domain of one subcarrier and one symbol.

A bandwidth part (BWP) (which may be referred to as a partial bandwidth, or the like) may indicate a subset of consecutive common resource blocks (RBs) for certain numerology, on a certain carrier. Where, the common RB may be specified by an RB index with reference to a common reference point in a given carrier. The PRB is defined by a certain BWP, and may be numbered in the BWP.

The BWP may include a BWP (UL BWP) for UL and a BWP (DL BWP) for DL. For UE, one or more BWPs may be configured in one carrier.

At least one of configured BWPs may be active, and UE may not be assumed to transmit and receive a predetermined signal/channel, except for the active BWP. Note that the "cell," the "carrier," or the like in the present disclosure may be replaced with the "BWP."

The structures of the above radio frame, the subframe, the slot, the mini-slot, the symbol, and the like are merely examples. For example, the configurations, such as the number of subframes included in a radio frame; the number of slots per subframe or radio frame; the number of mini-slots included in a slot; the number of each of symbols and RBs, the symbols being included in a slot or a mini-slot; the number of subcarriers included in an RB; the number of symbols in a TTI; a symbol length; a cyclic prefix (CP) length; and the like, can be variously changed.

In the present disclosure, for example, when an article such as "a," "an," or "the" in English is added by translating, the present disclosure may include a case in which a noun following the article is in the plural.

In the present disclosure, the expression "A and B are different" may mean "A and B are different from each other." Note that the expression may mean "each of A and B is different from C." Terms such as "separated," "coupled," or the like may be also interpreted, as is the case with "different."

Each aspect/embodiment described in the present disclosure may be used alone or in combination, or be switched according to the execution. Further, notification of predetermined information (for example, notification of "being X") is not limited to being performed explicitly, and may be performed implicitly (for example, the predetermined information is not indicated).

The present disclosure has been described above in detail. It would be apparent to those skilled in the art that the present disclosure is not limited to the embodiment described in the present disclosure. Modifications and changes of the present disclosure can be made without departing from a spirit and scope of the present disclosure set forth in the claims. Therefore, the description of the present disclosure is provided for illustrative purposes, and is not intended to limit the present disclosure.

### DESCRIPTION OF THE REFERENCE NUMERALS

10 base station
110 transmitting unit
120 receiving unit
130 setting unit
140 control unit
20 terminal
210 transmitting unit
220 receiving unit
230 setting unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheel
2008 rear wheel
2009 axle
2010 electronic control unit
2012 information service unit
2013 communication module
2021 current sensor
2022 rotational speed sensor
2023 air pressure sensor
2024 vehicle speed sensor
2025 accelerometer
2026 brake pedal sensor
2027 shift lever sensor
2028 object detection sensor
2029 accelerator pedal sensor
2030 drive support system unit
2031 microprocessor
2032 memory (ROM, RAM)
2033 communication port (IO port)

## Claims

1. A base station comprising:
a transmitting unit configured to transmit a downlink signal to a plurality of terminals; and
a control unit configured to control transmission power of the downlink signal,
wherein the control unit is configured to
change transmission power of a first downlink signal that is common to the plurality of terminals, and
control, for each of the plurality of terminals, transmission power of a second downlink signal that is to be individually transmitted to each terminal among the plurality of terminals.

2. The base station according to claim 1, wherein the control unit is configured to change the transmission power of the first downlink signal, based on a visited state of one or more terminals among the plurality of terminals.

3. The base station according to claim 1, wherein the transmitting unit is configured to transmit information related to a transmission power control of the first downlink signal to another base station.

4. The base station according to claim 1, wherein the transmitting unit is configured to transmit information related to a transmission power control of the first downlink signal to at least one of the plurality of terminals.

5. The base station according to claim 1, further comprising:
a receiving unit configured to receive information related to a transmission power control of the second downlink signal, from at least one of the plurality of terminals,
wherein the control unit is configured to control the transmission power of the second downlink signal, based on the information related to the transmission power control of the second downlink signal.

6. A communication method comprising:
a transmission procedure of transmitting a downlink signal to a plurality of terminals;
a control procedure of controlling transmission power of the downlink signal;
a procedure of changing transmission power of a first downlink signal that is common to the plurality of terminals; and
a procedure of controlling, for each of the plurality of terminals, transmission power of a second downlink signal that is to be individually transmitted to each terminal among the plurality of terminals.
